Europäisches Patentamt

European Patent Office

Office européen des brevets

(19)

(11) Veröffentlichungsnummer: **0 412 536 A1**

# (12) EUROPÄISCHE PATENTANMELDUNG

(21) Anmeldenummer: 90115260.3

(22) Anmeldetag: 08.08.90

(51) Int. Cl.⁵: **F16B 39/10**, //F16C35/06

(30) Priorität: 08.08.89 DE 3926113

(43) Veröffentlichungstag der Anmeldung:
**13.02.91 Patentblatt 91/07**

(84) Benannte Vertragsstaaten:
**AT BE CH DE FR GB IT LI NL**

(71) Anmelder: **Klöckner-Humboldt-Deutz
Aktiengesellschaft
Deutz-Mülheimer-Strasse 111 Postfach 80 05
09
D-5000 Köln 80(DE)**

(72) Erfinder: **Welke, Helmut
Kasparstrasse 17
D-5000 Köln 90(DE)**

(54) Verdrehsicherung für eine Nutmutter.

(57)

1. Anordnung einer Verdrehsicherung für eine Schraubverbindung.

2.1 Einstellbare Schraubverbindungen, eingesetzt zwischen Bauteilen, die ein vorgebbares Spiel aufweisen müssen, verlangen Fixierungen zur Erreichung einer möglichst hohen Feinstufigkeit.

2.2 Zur Verbesserung der Feinstufigkeit bei Beibehaltung einer robusten im Aufbau einfachen Verdrehsicherung ist ein Fixierblech 1 vorgesehen, dessen Nasen 5 in einem bestimmten An-stellwinkel $\alpha$ zur Längsachse 17 angebracht sind und das Winkelmaß in einem bestimmten Verhältnis zum Teilungswinkel $\beta$ steht, der den Abstand der Ausnehmungen 7 in der Nutmutter 9 bestimmt.

2.3 Die vorgestellte Verdrehsicherung ermöglicht bei einer Beibehaltung der Ausnehmungen in der Nutmutter eine Verdopplung der Feinstufigkeit.

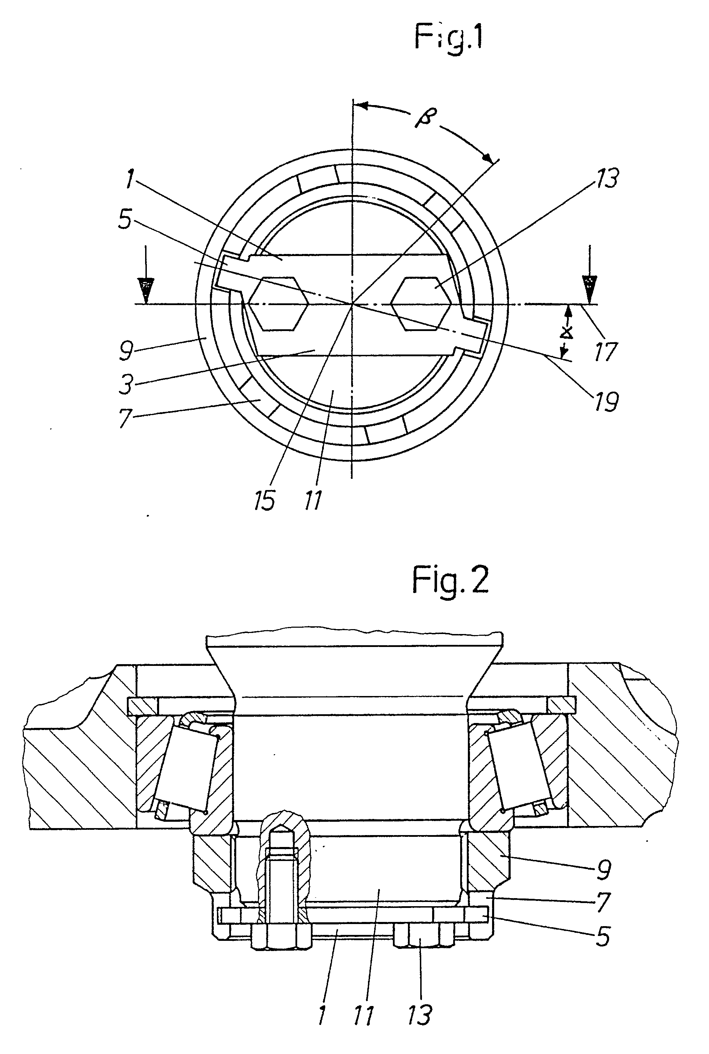

3. Der Figur 2 ist eine erfindungsgemäße Verdrehsicherung an einer mit einem Kegelrollenlager versehenen Welle zu entnehmen.

Fig. 2

EP 0 412 536 A1

# VERDREHSICHERUNG FÜR EINE NUTMUTTER

Die Neuerung bezieht sich auf eine Verdrehsicherung für Nutmuttern einer Schraubverbindung, insbesondere nach den Merkmalen des Oberbegriffs des Patentanspruchs 1.

Bekannt sind Verdrehsicherungen für Nutmuttern, die ein Fixierblech aufweisen, das stirnseitig am Gewindebolzen der Schraubverbindung bzw. einer Welle befestigt und mit Nasen versehen ist, die in Ausnehmungen der Nutmutter eingreifen bei Übereinstimmung der Lageposition zwischen der Nase mit den Ausnehmungen in der Nutmutter. Die Einstellungsgüte der Schraubverbindung wird bestimmt durch die Anzahl der Ausnehmungen in der Nutmutter. Aus der Praxis bekannt sind Nutmuttern, die eine Teilung von maximal 45° aufweisen für den Abstand der Ausnehmungen zueinander, insbesondere bei kleineren Schraubverbindungen mit einem relativ kleinen Umfang, auf denen die Ausnehmungen der Nutmutter eingebracht sind, ergibt sich aus Festigkeitsgründen -Verbindungsstege zwischen den einzelnen Ausnehmungen werden zu schmal-, daß Winkel kleiner als 60° nicht vorgesehen werden können. Diese Stuf igkeit der Einstellung reicht jedoch für viele zu sichernde Schraubver bindungen beispielsweise Kegelrollenlagerungen in 0-Anordnungen nicht aus, da diese eine exakte feinstufige Fixierung benötigen.

Der Neuerung liegt daher die Aufgabe zugrunde, eine Verdrehsicherung so zu gestalten, durch die bei gleicher Anzahl der Ausnehmungen die Feinstufigkeit der Einstellung erhöht und damit die Schraubverbindung exakt einstellbar ist.

Diese Aufgabe wird durch eine Fixierblechgestaltung mit den im Kennzeichen des Anspruchs 1 aufgeführten Merkmalen gelöst.

Danach ist das für die Verdrehsicherung vorgesehene Fixierblech als ein nahezu rechteckiges Blech ausgebildet mit mindestens einer Nase, die auf einer Diagonalen des Fixierblechs angeordnet ist, in der Form, daß die Radiale der Nase zur Längsachse des Fixierblechs einen spitzen Winkel einschließt, sowie mit zwei Bohrungen auf der Längsachse zur Befestigung des Fixierbleches an dem Schrauben, bzw. Wellenzapfen. Die erfindungsgemäße Schraubensicherung erlaubt eine feinere Stufung und damit genauere Einstellung der Schraubenverbindung.

Durch ein bestimmtes Winkelverhältnis zwischen der Teilung der einzelnen Ausnehmungen und einem festgelegten Winkel am Fixierblech zwischen dessen Längsachse und den dazu auf einer Diagonalen angeordneten Nasen ist die Stufung bestimmbar. Zur Erreichung einer praxisgerechten Feinstufigkeit hat sich vorteilhaft ein Winkelverhältnis bewährt bei dem die Teilung der Ausnehmungen den 4-fachen Wert des Winkels zwischen der Längsachse und der Nase am Fixierblech auf weist. Bei diesem Winkelverhältnis kann die Nutmutter im Abstand des halben Teilungswinkels der Ausnehmungen gesichert werden, indem durch Umdrehen des Fixierblechs dessen Nasen in die nächsten Ausnehmungen der Nutmutter eingreifen. Erfindungsgemäß ergibt sich bei gleicher Feinstufigkeit der Einstellung eine Halbierung der Nutenzahl, bzw. bei gleicher Nutenzahl eine Verdopplung der Einstellmöglichkeiten und damit eine ausreichende Feinstufigkeit. Die Neuerung zeigt somit ein Fixierblech, welches in allen von den Befestigungsbohrungen des Fixierblechs am Gewindebolzen möglichen Positionen bzw. Lagen eine Sicherung der Schraubenverbindung erlaubt. Folglich ist neben einer Verdrehung um 180° auch die Befestigung bei Umkehrung des Fixierblechs am Gewindebolzen möglich. Als Befestigung des Fixierblechs am Schraubenbolzen ist erfindungsgemäß mindestens eine exzentrisch zur Mittenachse angeordnete Befestigungsschraube vorgesehen. Aus Symmetriegründen und zur gleichen Lastverteilung beider Nasen bieten sich zwei im gleichen Abstand zur Mittenachse versetzt angeordnete Befestigungsschrauben an. Zur Erreichung einer häufigen Verwendbarkeit des erfindungsgemäßen Fixierblechs erfolgt die Sicherung der Schraubverbindung ausschließlich durch Einlegen der am Fixierblech befindlichen Nasen in die dafür vorgesehenen Ausnehmungen an der Nutmutter und einem daran sich anschließenden Einsetzen und Anziehen der Befestigungsschrauben. Es ist folglich kein manuelles Verbiegen oder Anpassen der Nasen an die Nutmutternausnehmungen notwendig.

Zur weiteren Erläuterung der Neuerung wird auf die Figurenbeschreibung verwiesen, die ausführlich das in den Zeichnungen dargestellte Ausführungsbeispiel erläutert.

Es zeigt

Fig. 1 das erfindungsgemäße Fixierblech eingelegt in die Ausnehmungen einer Nutmutter, welche auf einen Gewindebolzen aufgeschraubt ist,

Fig. 2 in einer Schnittdarstellung gemäß der Linie A-A, (siehe Figur 1) die Verdrehsicherung angebracht an einem Gewindebolzen zur Einstellung eines Kegelrollenlagers.

Aus der Figur 1 ist das in Richtung der Längsachse 17 stirnseitig auf dem Gewindebolzen 11 angeordnete Fixierblech 1 dargestellt. Das Mittenteil 3 des Fixierblechs 1 weist eine nahezu rechteckige Grundform auf, die einer Raute nachempfunden ist. An zwei Eckpunkten weist das Fixierblech 1 Nasen 5 auf, die durch eine die Mittenachse 15 schneidende Diagonale zu verbinden sind. Das Breitenmaß der Nasen 5 ist dem Maß der Ausnehmung 7 in der Nutmutter 9 angepaßt, wobei dieses zum problemlosen Einfügen geringfügig schmaler ist. Die Längserstreckung des Fixierblechs ist zur Vermeidung von aus der Ausnehmung 7 ragenden Kanten kleiner als der Außendurchmesser der Nutmutter 9 im Bereich der Ausnehmungen 7. Die Nutmutter 9 weist eine Mehrzahl von symmetrisch auf dem Außenumfang der Nutmutter eingebrachte Ausnehmungen auf, wobei im Bereich der Ausnehmungen 7 die Nutmutter 9 im Vergleich zur Gewindezone eine geringere Wandstärke aufweist. Weiter ist der Figur 1 der Winkel $\alpha$ zu entnehmen, der sich zwischen der Diagonalen 19 und der Längsachse 17 ergibt und damit den Anstellwinkel der Nase 5 bestimmt. Die Teilung der Ausnehmungen 7 ist mit dem Winkel $\beta$ angegeben. Das in der Figur 1 dargestellte Winkelverhältnis von 4:1, d. h. der Winkel $\beta$ besitzt den 4-fachen Wert des Winkels $\alpha$, erlaubt eine Fixierung der Schraubverbindung bei jeder Verdrehung der Nutmutter, die dem halben $\beta$-Winkel entspricht.

Der Fig. 2 ist ein Einbaubeispiel der erfindungsgemäßen Verdrehsicherung für eine Schraubverbindungan an einer Kegelrollenlagerung zu entnehmen, die am Ende eines Gewindebolzens 11 -ausgebildet als Wellenende-angeordnet ist. Diese Darstellung verdeutlicht den axialen Einstellbereich, der vorgegeben ist durch die Tiefe der Ausnehmungen 7 in der Nutmutter 9 sowie die Befestigung des Fixierblechs 1 an der Stirnseite des Gewindebolzens 11 mittels Befestigungsschrauben 13.

## Ansprüche

1. Verdrehsicherung für eine Nutmutter einer Schraubenverbindung mittels eines Fixierbleches mit zumindest einer Nase, die in eine Ausnehmung einer Nutmutter ragt, wobei das Fixierblech auf einer Längsachse Schraubenlöcher zur Befestigung an einem Gewindebolzens aufweist, dadurch gekennzeichnet, daß das Fixierblech (1) eine nahezu rechteckige Grundform besitzt und die Nase 5 auf einer Diagonalen (19) angeordnet ist, wobei die Diagonale (19) abweichend zu der Längsachse (17) verläuft.

2. Verdrehsicherung für eine Nutmutter, dadurch gekennzeichnet, daß zwei Nasen (5) am Fixierblech (1) angebracht sind, die in zwei gegenüberliegende Ausnehmungen (7) der Nutmutter (9) eingreifen.

3. Verdrehsicherung für eine Nutmutter, dadurch gekennzeichnet, daß das Fixierblech (1) abhängig von der Stellung der Nutmutter(9) zum Gewindebolzen (11) beliebig umkehrbar einsetzbar ist.

4. Verdrehsicherung für eine Nutmutter, dadurch gekennzeichnet, daß das Fixierblech (1) um 180° drehbar zu einer Mittelachse (15) bei unveränderter Gewindebolzenstellung einsetzbar ist.

5. Verdrehsicherung für eine Nutmutter, dadurch gekennzeichnet, daß zur Sicherung der Nutmutter die Nasen (5) des Fixierbleches (1) unverändert bleiben.

6. Verdrehsicherung für eine Nutmutter, dadurch gekennzeichnet, daß ein Winkel $\beta$ zwischen zwei Ausnehmungen (7) den vierfachen Wert aufweist gegenüber einem Winkel $\alpha$ zwischen einer Längsachse (17) des Fixierblechs (1) und der daran angeordneten Nase (5).

7. Verdrehsicherung für eine Nutmutter, dadurch gekennzeichnet, daß mittels zwei Befestigungsschrauben (13) das Fixierblech (1) am Gewindebolzen (11) befestigt ist.

# Fig.1

# Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-1 420 737 (PALMGREN)<br>* das ganze Dokument *<br>– – – | 1-7 | F 16 B 39/10 //<br>F 16 C 35/06 |
| A | US-A-2 561 224 (PISCHEK ET AL.)<br>* Spalte 2, Zeilen 28 - 36; Figuren 1-4 *<br>– – – – – | 1,3 | |

RECHERCHIERTE SACHGEBIETE (Int. Cl.5)

F 16 B

Der vorliegende Recherchenbericht wurde für alle Patentansprüche erstellt

| Recherchenort | Abschlußdatum der Recherche | Prüfer |
|---|---|---|
| Den Haag | 20 November 90 | CALAMIDA G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

-----------------------------------------------------------------------

& : Mitglied der gleichen Patentfamilie, übereinstimmendes Dokument